# EUROPÄISCHE PATENTSCHRIFT

(11) **EP 0 707 692 B1**
(45) Veröffentlichungstag und Bekanntmachung des Hinweises auf die Patenterteilung: **27.12.1996**
(21) Anmeldenummer: 94920975.3
(22) Anmeldetag: 07.07.1994
(51) Int. Cl.: F16J 15/08, F16K 1/226

(54) **VORRICHTUNG ZUR ABDICHTUNG ZWISCHEN ZWEI ANLAGENTEILEN**
DEVICE FOR PROVIDING A SEAL BETWEEN TWO PARTS OF AN INSTALLATION
DISPOSITIF PERMETTANT D'ASSURER L'ETANCHEITE ENTRE DEUX PARTIES D'UNE INSTALLATION

(30) Priorität: 08.07.1993 DE 4322806
(43) Veröffentlichungstag der Anmeldung: 24.04.1996
(73) Patentinhaber: MANNESMANN Aktiengesellschaft, 40213 Düsseldorf (DE)
(72) Erfinder: JANICH, Hans-Jürgen, D-59269 Beckum (DE)
(74) Vertreter: Tetzner, Volkmar, Dr.-Ing. Dr. jur.
(86) Internationale Anmeldenummer: EP9402221
(87) Internationale Veröffentlichungsnummer: WO9502136

(56) Entgegenhaltungen:
- EP-A- 0 340 430
- DE-A- 4 122 605
- DE-C- 501 524

## Beschreibung

Die Erfindung betrifft eine Vorrichtung zur Abdichtung zwischen zwei relativ zueinander beweglichen Anlagenteilen, insbesondere zwischen zwei Klappenflügeln, enthaltend ein durch einen Federstahlstreifen gebildetes Dichtungselement, das zwei parallel nebeneinander angeordnete, nach der gleichen Seite weisende und mittels einer Klemmeinrichtung an dem einen Anlagenteil befestigbare ebene Spannränder sowie eine bogenförmig gekrümmte Dichtungszone enthält, wobei zumindest zwischen einem der beiden Spannränder und der Dichtungszone wenigstens eine Abwinkelung vorgesehen ist und wobei der andere Anlagenteil im Scheitelbereich der bogenförmig gekrümmten Dichtungszone mit dem Dichtungselement in Berührung kommt und die Relativbewegung zwischen beiden Anlagenteilen etwa tangential zu diesem Scheitelbereich erfolgt.

Durch die DE-A-41 22 605 ist bereits eine Absperrarmatur bekannt, deren Dichtungselement durch einen U-förmig gebogenen Federstahlstreifen gebildet wird. Die beiden Schenkel dieses Federstahlstreifens sind mit ihren freien Enden an dem stationären Anlagenteil befestigt, wobei mindestens der mit dem beweglichen Anlagenteil zusammenwirkende Schenkel im wesentlichen in Schließrichtung dieses Anlagenteiles verläuft. Dabei ist eine Versteifungseinrichtung zum Halten des dem stationären Anlagenteil zugewandten Schenkels des Federstahlstreifens vorgesehen.

Eine derartige Absperrarmatur ist mit einigen wesentlichen Nachteilen behaftet. So neigt das langgestreckte Dichtungselement zu unkontrollierten Verformungen. Da ferner die dem Gasdruck ausgesetzte Angriffsfläche des Dichtungselementes verhältnismäßig groß ist, besteht in hohem Maße die Gefahr, daß das Dichtungselement unter bestimmten Betriebsbedingungen von der Gegenfläche abhebt. Bedingt durch die Relativanordnung zwischen dem Dichtungselement und dem mit einem Schenkel dieses Dichtungselementes zusammenwirkenden beweglichen Anlagenteil (beispielsweise einer Klappe), muß ferner bei dieser bekannten Ausführung die Dichtungszone im Bereich der Welle des beweglichen Anlagenteiles unterbrochen werden, was die Gefahr von Undichtigkeiten in diesem Bereich mit sich bringt.

Die vorstehend genannten Nachteile der bekannten Ausführung sind bei einer gattungsgemäßen Vorrichtung gemäß EU-B-0 340 430 vermieden. Bei dieser Ausführung enthält das Dichtungselement zwischen einem der beiden parallel zueinander verlaufenden Spannränder sowie einer bogenförmig gekrümmten Dichtungszone wenigstens eine Abwinkelung, wobei der andere Anlagenteil im Scheitelbereich der bogenförmig gekrümmten Dichtungszone mit dem Dichtungselement in Berührung kommt und die Relativbewegung zwischen beiden Anlagenteilen etwa tangential zu diesem Scheitelbereich erfolgt.

Bei einer derartigen Vorrichtung lassen sich unkontrollierte Verformungen des Dichtungselementes wesentlich besser vermeiden. Da ferner der im Sinne eines Abhebens des Dichtungselementes wirkende Gasdruck eine wesentlich kleinere Angriffsfläche als bei der oben geschilderten bekannten Ausführung findet, bleibt eine zuverlässige Abdichtung auch unter ungünstigen Betriebsumständen gewährleistet. Vorteilhaft ist schließlich, daß ein Dichtungselement der gattungsgemäßen Art relativ zum beweglichen Anlagenteil so angeordnet werden kann, daß sich auch im Wellenbereich des beweglichen Anlagenteiles eine ununterbrochene Dichtzone ergibt.

Bei der Weiterentwicklung der Vorrichtung gemäß EU-B-0 340 430 haben sich gewisse Verbesserungen als wünschenswert erwiesen.

So wird das Dichtungselement gemäß EU-B-0 340 430 bei der Relativbewegung der beiden Anlagenteile in der einen Richtung vielfach etwas von seiner Auflagefläche abgehoben, wobei es nahe seiner Einspannstelle auf Biegung beansprucht wird, was nach einer gewissen Betriebszeit zum Bruch an dieser Stelle führen kann.

Weiterhin wurde festgestellt, daß derartige Dichtungselemente bei Verwendung in Gaskanälen mit hohen Strömungsgeschwindigkeiten zu Schwingungen angeregt werden, was gleichfalls unerwünschte Beanspruchungen an der Einspannstelle mit sich bringt.

Der Erfindung liegt daher die Aufgabe zugrunde, unter Vermeidung dieser Nachteile eine Vorrichtung der im Oberbegriff des Anspruches 1 vorausgesetzten Art so auszubilden, daß das Dichtungselement bei einer Relativbewegung der Anlagenteile seine Lage im wesentlichen beibehält, sich insbesondere nicht von seiner Auflagefläche abhebt. Weiterhin sollen auch störende Schwingungen des Dichtungselementes weitgehend unterdrückt werden.

Diese Aufgabe wird erfindungsgemäß dadurch gelöst, daß im Innern des Dichtungselementes ein Stützelement derart angeordnet ist, daß es am Dichtungselement nahe der Abwinkelung anliegt und bei einer Relativbewegung der Anlagenteile einem Abheben des abgestützten Bereiches des Dichtungselementes von seiner Gegenfläche entgegenwirkt.

Zweckmäßige Ausgestaltungen der Erfindung sind Gegenstand der Unteransprüche.

Wesentlich ist, daß bei der erfindungsgemäßen Lösung das im Innern des Dichtungselementes vorgesehene Stützelement so angeordnet ist, daß es am Dichtungselement gerade in der Nähe der Abwinkelung zwischen der bogenförmig gekrümmten Dichtungszone und dem einen Spannrand anliegt und bei einer Relativbewegung der Anlagenteile einem Abheben des abgestützten Bereiches des Dichtungselementes von seiner Gegenfläche, insbesondere einem Abheben der genannten Abwinkelung, entgegenwirkt. Auf diese Weise wird insbesondere die Einspannstelle des Dichtungselementes vor unerwünschten Biegebeanspruchungen geschützt. Zugleich wird die wünschenswerte Abwinkelung auch gegenüber den wechselnden betrieblichen Beanspruchungen aufrechterhalten.

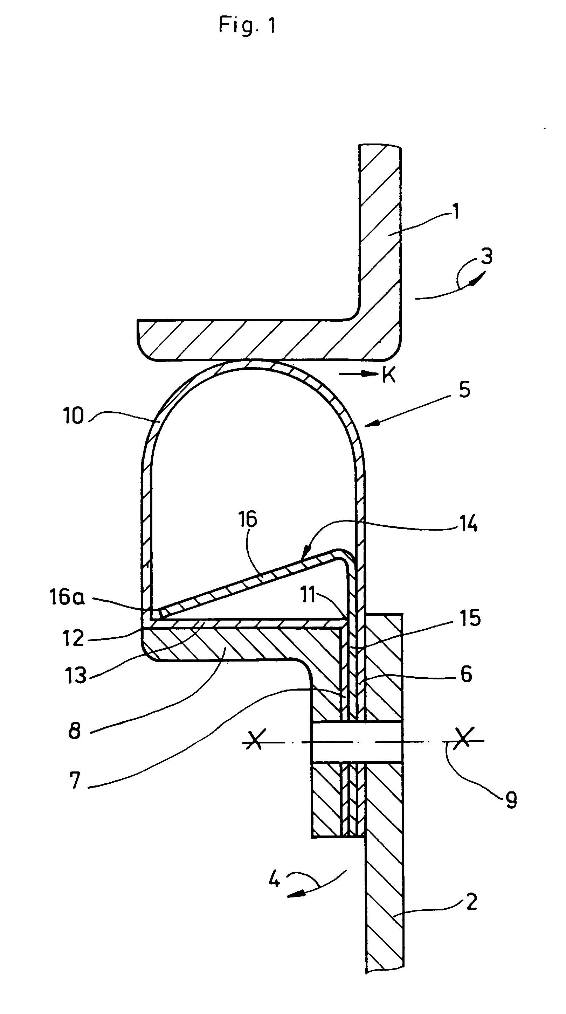

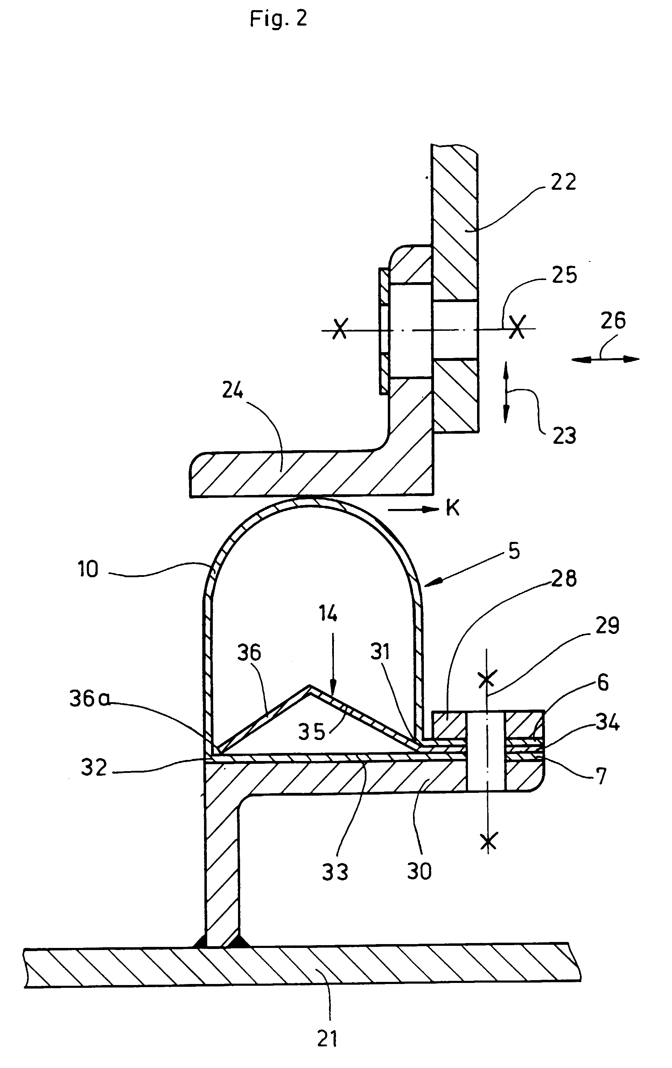

Zwei Ausführungsbeispiele der Erfindung sind in einem schematischen Schnitt in den Fig.1 und 2 der Zeichnung veranschaulicht.

Fig.1 zeigt ein erstes Ausführungsbeispiel der erfindungsgemäßen Vorrichtung zur Abdichtung zwischen zwei relativ zueinander beweglichen Klappenflügeln 1 und 2, die in der Schließstellung dargestellt sind und die beim Öffnen der Klappe eine Schwenkbewegung in Richtung der Pfeile 3 bzw. 4 ausführen.

Am Klappenflügel 2 ist ein Dichtungselement 5 angebracht, das durch einen Federstahlstreifen gebildet wird. Dieses Dichtungselement 5 enthält zwei parallel nebeneinander angeordnete ebene Spannränder 6, 7, die nach der gleichen Seite (gemäß Fig.1 nach unten) weisen und mittels einer Klemmeinrichtung, bestehend aus einem Klemmwinkel 8 und einer Anzahl von Klemmschrauben 9, am Klappenflügel 2 befestigt sind.

Das Dichtungselement 5 enthält weiterhin eine bogenförmig gekrümmte Dichtungszone 10, in die der Spannrand 6 in gerader Verlängerung übergeht. Zwischen dem anderen Spannrand 7 und der gekrümmten Dichtungszone 10 sind zwei im entgegengesetzten Sinne gerichtete 90°-Abwinkelungen 11, 12 vorgesehen. Mit seinem zwischen diesen beiden Abwinkelungen 11 und 12 befindlichen Auflagebereich 13 liegt das Dichtungselement 5 auf dem Klemmwinkel 8 auf.

Im Innern des Dichtungselementes 5 ist ein Stützelement 14 angeordnet, das zwei Schenkel 15, 16 aufweist, die einen Winkel zwischen 45 und 85°, vorzugsweise zwischen 60 und 80°, miteinander bilden. Der Schenkel 15 ist mit einem Teil seiner Länge zwischen den Spannrändern 6 und 7 des Dichtungselementes 5 eingespannt und mittels derselben Klemmeinrichtung (Klemmwinkel 8 und Klemmschrauben 9) befestigt.

Der andere Schenkel 16 des Stützelementes 14 liegt mit seinem freien Ende 16a nahe der zweiten 90°-Abwinkelung 12 an der Innenseite des Dichtungselementes 5 an.

Der Klappenflügel 1 steht in der Schließstellung (Fig.1) mit dem Scheitelbereich der bogenförmig gekrümmten Dichtungszone 10 des Dichtungselementes 5 in Berührung. Die Relativbewegung zwischen den Klappenflügeln 1 und 2 beim Öffnen und Schließen der Klappe erfolgt etwa tangential zu diesem Scheitelbereich.

Werden die Klappenflügel 1 und 2 im Öffnungssinne relativ zueinander in Richtung der Pfeile 3 bzw. 4 bewegt, so wird auf das Dichtungselement 5 über die bogenförmig gekrümmte Dichtungszone 10 eine Kraft K ausgeübt, die das Dichtungselement 5 zu verformen und den Auflagebereich 13 vom Klemmwinkel 8 abzuheben sucht (was zu der eingangs erwähnten, unerwünschten Biegebeanspruchung der Abwinkelung 11 führen würde). Das Stützelement 14 wirkt einem solchen Abheben jedoch zuverlässig entgegen und verhindert auf diese Weise gefährliche Biegebeanspruchungen der Einspannstelle. Außerdem schützt das Stützelement 14 das Dichtungselement 5 wirksam vor Schwingungen und Vibrationen aufgrund hoher Gasströmungsgeschwindigkeiten.

Bei dem in Fig.2 dargestellten zweiten Ausführungsbeispiel der Erfindung sind für dieselben Elemente gleiche Bezugszeichen wie in Fig.1 verwendet.

Die beiden relativ zueinander beweglichen Anlagenteile werden hierbei durch ein Klappengehäuse 21 und einen Klappenflügel 22 gebildet, wobei der Klappenflügel 22 einen in Richtung des Doppelpfeiles 23 einstellbaren Winkel 24 trägt, der über Schrauben 25 mit dem Klappenflügel 22 verbunden ist. Der Klappenflügel 22 und der von ihm getragene Winkel 24 sind relativ zum Klappengehäuse 21 in Richtung des Doppelpfeiles 26 beim Öffnen und Schließen der Klappe beweglich.

Das Dichtungselement 5 enthält wieder zwei Spannränder 6 und 7, die mittels einer Klemmeinrichtung (bestehend aus einem Klemmblech 28, Klemmschrauben 29 und einer Stützfläche 30) zusammengespannt sind.

Zwischen den beiden Spannrändern 6 und 7 der bogenförmig gekrümmten Dichtungszone 10 ist je eine 90°-Abwinkelung 31 bzw. 32 vorgesehen. Das Dichtungselement 5 liegt mit seinem zwischen dem Spannrand 7 und der zugehörigen Abwinkelung 32 befindlichen Auflagebereich 33 auf der Stützfläche 30 auf.

Im Innern des Dichtungselementes 5 ist auch bei diesem Ausführungsbeispiel ein Stützelement 14 vorgesehen, das im Anschluß an seine zwischen den beiden Spannrändern 6 und 7 des Dichtungselementes 5 eingespannte Zone 34 eine dachförmige Gestalt (bestehend aus den Dachflächen 35, 36) aufweist und mit seinem freien Ende 36a nahe der an den Auflagebereich 33 angrenzenden 90°-Abwinkelung 32 an der Innenseite des Dichtungselementes 5 anliegt.

Auch bei diesem Ausführungsbeispiel wird bei einer Bewegung des Klappenflügels 22 nach rechts auf das Dichtungselement 5 ein Kraft K ausgeübt, die den Auflagebereich 33 von der Stützfläche 30 abzuheben und die Einspannstelle auf Biegung zu beanspruchen sucht. Das Stützelement 14 wirkt dem jedoch zuverlässig entgegen.

## Patentansprüche

1. Vorrichtung zur Abdichtung zwischen zwei relativ zueinander beweglichen Anlagenteilen (1, 2 bzw. 21, 22), insbesondere zwischen zwei Klappenflügeln, enthaltend ein durch einen Federstahlstreifen gebildetes Dichtungselement (5), das zwei parallel nebeneinander angeordnete, nach der gleichen Seite weisende und mittels einer Klemmeinrichtung an dem einen Anlagenteil (2 bzw. 21) befestigbare ebene Spannränder (6, 7) sowie eine bogenförmig gekrümmte Dichtungszone (10) enthält, wobei zumindest zwischen einem der beiden Spannränder und der Dichtungszone wenigstens eine Abwinkelung (12 bzw. 32) vorgesehen ist und wobei der andere Anlagenteil (1 bzw. 22) im Scheitelbereich der bogenförmig gekrümmten Dichtungszone (10) mit dem Dichtungselement (5) in Berührung kommt und die Relativbewegung zwischen beiden Anlagenteilen (1, 2 bzw. 21, 22) etwa tangential zu diesem Scheitelbereich erfolgt, dadurch gekennzeichnet, daß im Innern des Dichtungselementes (5) ein Stützelement (14) derart angeordnet ist, daß es am Dichtungselement nahe der Abwinkelung (12 bzw. 32) anliegt und bei einer Relativbewegung der Anlagenteile einem Abheben des abgestützten Bereiches (13 bzw. 33) des Dichtungselementes von seiner Gegenfläche (8 bzw. 30) entgegenwirkt.

2. Vorrichtung nach Anspruch 1, dadurch gekennzeichnet, daß das Stützelement (14) durch ein abgewinkeltes Blech gebildet wird, das zwischen den beiden Spannrändern (6, 7) des Dichtungselementes mittels derselben Klemmeinrichtung befestigbar ist.

3. Vorrichtung nach den Ansprüchen 1 und 2, bei der der eine Spannrand (6) in gerader Verlängerung in die bogenförmig gekrümmte Dichtungszone (10) übergeht, während zwischen dem anderen Spannrand (7) und der Dichtungszone zwei im entgegengesetzten Sinne gerichtete 90°-Abwinkelungen (11, 12) vorgesehen sind und das Dichtungselement (5) mit seinem zwischen den beiden Abwinkelungen befindlichen Auflagebereich (13) auf einem die Gegenfläche bildenden Teil (8) der Klemmeinrichtung aufliegt, dadurch gekennzeichnet, daß das Stützelement (14) zwei Schenkel (15, 16) aufweist, die einen Winkel zwischen 45 und 85°, vorzugsweise zwischen 60 und 80°, miteinander bilden, wobei der eine Schenkel (15) mit einem Teil seiner Länge zwischen den Spannrändern (6, 7) des Dichtungselementes (5) eingespannt ist und der andere Schenkel (16) mit seinem freien Ende (16a) nahe der zweiten 90°-Abwinkelung (12) an der Innenseite des Dichtungselementes (5) anliegt.

4. Vorrichtung nach den Ansprüchen 1 und 2, bei der zwischen den beiden Spannrändern (6, 7) und der bogenförmig gekrümmten Dichtungszone (10) je eine 90°-Abwinkelung (31, 32) vorgesehen ist und das Dichtungselement (5) mit seinem zwischen dem einen Spannrand (7) und der zugehörigen Abwinkelung (32) befindlichen Auflagebereich (33) auf einem die Gegenfläche bildenden Teil (30) der Klemmeinrichtung aufliegt, dadurch gekennzeichnet, daß das Stützelement (14) im Anschluß an seine zwischen den beiden Spannrändern (6, 7) des Dichtungselementes (5) eingespannte Zone (34) eine dachförmige Gestalt (35, 36) aufweist und mit seinem freien Ende (36a) nahe der an den Auflagebereich (33) angrenzenden 90°-Abwinkelung (32) an der Innenseite des Dichtungselementes (5) anliegt.

## Claims

1. Device for providing a seal between two apparatus parts (1, 2 or 21, 22 respectively) which are movable relative to one another, particularly between two valve blades, comprising a sealing element (5) which is formed by a spring steel strip and comprises two planar gripping edges (6, 7) which are disposed parallel alongside one another, are directed towards the same side and can be fixed by means of a clamping device on one apparatus part (2 or 21 respectively) and further comprising a sealing zone (10) which is bent in a curved shape, wherein at least one bend (12 or 32 respectively) is provided at least between one of the two gripping edges and the sealing zone and wherein the other apparatus part (1 or 22 respectively) comes into contact with the sealing element (5) in the top region of the curved sealing zone (10) and the relative movement between the two apparatus parts (1, 2 or 21, 22 respectively) occurs approximately tangentially with respect to this top region, characterised in that a support element (14) is disposed in the interior of the sealing element (5) in such a way that it rests on the sealing element near the bend (12 or 32 respectively) and in the case of relative movement of the apparatus parts it counteracts lifting off the supported region (13 or 33 respectively) of the sealing element from its matching surface (8 or 30 respectively).

2. Device as claimed in Claim 1, characterised in that the support element (14) is formed by a bent plate which can be fixed between the two gripping edges (6, 7) of the sealing element by means of the same clamping device.

3. Device as claimed in Claims 1 and 2, in which one gripping edge (6) merges in direct extension into the curved sealing zone (10), whilst two 90° bends (11, 12) in opposite directions are provided between the other gripping edge (7) and the sealing zone, and the sealing element (5) with its bearing region (13) located between the two bends rests on a part (8) of the clamping device which forms the matching surface, characterised in that the support element (14) has two arms (15, 16) which enclose between them an angle between 45 and 85°, preferably between 60 and 80°, wherein one arm (15) is gripped with a part of its length between the gripping edges (6, 7) of the sealing element (5) and the other arm (16) rests with its free end (16a) near the second 90° bend (12) on the inner face of the sealing element (5).

4. Device as claimed in Claims 1 and 2, in which a 90° bend (31, 32) is provided in each case between the two gripping edges (6, 7) and the curved sealing zone (10) and the sealing element (5) with its bearing region (33) located between one gripping edge (7) and the associated bend (32) rests on a part (30) of the clamping device which forms the matching surface, characterised in that the support element (14) has a roof-shaped configuration (35, 36) adjoining its zone (34) which is gripped between the two gripping edges (6, 7) of the sealing element (5) and rests with its free end (36a) on the inner face of the sealing element (5) near the 90° bend (32) adjoining the bearing region (33).

## Revendications

1. Dispositif permettant d'assurer l'étanchéité entre deux parties d'installation mobiles relativement entre elles (1, 2 ou 21, 22), en particulier entre deux battants, contenant un élément d'étanchéité (5) formé par une bande d'acier pour ressort, qui contient deux bords de serrage (6, 7) plats disposés parallèlement entre eux, dirigés vers le même côté et pouvant être fixés au moyen d'un système de blocage sur une partie de l'installation (2 ou 21) ainsi qu'une zone d'étanchéité (10) arquée, au moins entre l'un des deux bords de serrage et la zone d'étanchéité, un coude (12 ou 32) étant prévu et l'autre partie de l'installation (1 ou 22) venant en contact avec l'élément d'étanchéité (5) au sommet de la zone d'étanchéité arquée (10) et le mouvement relatif entre les deux parties d'installation (1, 2 ou 21, 22) s'effectuant sensiblement de façon tangentielle à ce sommet, caractérisé en ce qu'un élément d'appui (14) est disposé à l'intérieur de l'élément d'étanchéité (5) de telle sorte qu'il s'appuie sur l'élément d'étanchéité à proximité du coude (12 ou 32) et lors d'un mouvement relatif des parties de l'installation s'oppose au soulèvement de la zone supportée (13 ou 33) de l'élément d'étanchéité de sa contre-surface (8 ou 30).

2. Dispositif selon la revendication 1, caractérisé en ce que l'élément d'appui (14) est constitué par une tôle coudée qui peut être fixée entre les deux bords de serrage (6 et 7) de l'élément d'étanchéité au moyen de son dispositif de blocage.

3. Dispositif selon les revendications 1 et 2, dans lequel un bord de serrage (6) se poursuit en prolongement droit dans la zone d'étanchéité arquée (10), tandis qu'entre l'autre bord de serrage (7) et la zone d'étanchéité sont prévus deux coudes à 90° (11, 12) dirigés dans le sens opposé et l'élément d'étanchéité (5) repose par sa zone d'appui (13) située entre les deux coudes sur une partie (8) formant une contre-surface du dispositif de blocage, caractérisé en ce que l'élément d'appui (14) présente deux branches (15, 16) qui forment un angle entre 45 et 85°, de préférence entre 60 et 80°, une branche (15) étant bloquée sur une partie de sa longueur entre les bords de serrage (6, 7) de l'élément d'étanchéité (5) et l'autre branche (16) reposant par son extrémité libre (16a) à proximité du deuxième coude à 90° (12) sur le côté interne de l'élément d'étanchéité (5).

4. Dispositif selon les revendications 1 et 2, dans lequel entre les deux bords de serrage (6, 7) et la zone d'étanchéité arquée (10), est respectivement prévu un coude à 90° (31, 32) et l'élément d'étanchéité (5) repose par sa zone d'appui (33) située entre un bord de serrage (7) et le coude correspondant (32) sur la partie (30) formant la contre-surface du dispositif de serrage, caractérisé en ce que l'élément d'appui (14) présente sur la zone (34) insérée entre les deux bords de serrage (6, 7) de l'élément d'étanchéité (5), une forme de toit (35, 36) et s'appuie par son extrémité libre (36a) à proximité du coude à 90° (32) limitrophe de la surface d'appui (33) sur le côté interne de l'élément d'étanchéité (5).
